# EUROPEAN PATENT SPECIFICATION

(11) **EP 3 421 159 B1**
(45) Date of publication and mention of the grant of the patent: **10.12.2025**
(21) Application number: 17178058.8
(22) Date of filing: 27.06.2017
(51) Int. Cl.: B23B 27/04, B23B 29/04

(54) **DOUBLE ENDED CUTTING INSERT FOR PARTING**
DOPPELENDIGER SCHNEIDEINSATZ ZUM TRENNEN
INSERT DE COUPE À DOUBLE EXTRÉMITÉ POUR TRONÇONNAGE

(43) Date of publication of application: 02.01.2019
(73) Proprietor: WALTER AG, 72072 Tübingen (DE)
(72) Inventor: ZEEB, Rudi, 72070 Tübingen (DE)
(74) Representative: Sandvik

(56) References cited:
- EP-A1- 0 802 006
- EP-A1- 0 865 851
- EP-A2- 1 332 815
- WO-A1-00/13824
- WO-A1-99/30859
- US-A1- 2014 234 040

## Description

The present invention is related to a double ended cutting insert designed for parting and grooving, having the basic shape of an elongated cuboid body, comprising a top side, a bottom side, two oppositely arranged side faces connecting the left and right edges, respectively, of the top and bottom sides, respectively, and two oppositely arranged end faces connecting the top and bottom sides as well as the side faces, wherein main cutting edges are formed at the transition from each of the end faces to the top side and/or the bottom side, wherein a relief surface is formed on the end faces adjacent each main cutting edge.

Such cutting inserts which are typically used for parting and grooving, as known, for example from EP 0 865 851 A1, are designed to be inserted into a slot of a narrow blade which serves as a cutting insert holder or a part thereof, wherein the blade comprises a recess at one end thereof in which a cutting insert is received and clamped. Typically, the blade thickness is slightly smaller than the extension of a cutting edge of the cutting insert along the direction of the narrow width of the blade (the thickness direction), which allows the cutting insert to be fed into the surface of a rotating work piece up to a depth, which exceeds that part of the cutting insert projecting beyond the blade, such that a portion of the blade extends into the slot of the work piece generated by the cutting insert during parting or deep grooving.

In order to avoid heavy loads on the cutting inserts and in order to avoid an unnecessary waste of material due to the removal of a large amount of chips generated during a parting operation, the width of the cutting insert, defined by the maximum distance between the oppositely arranged side faces in particular at the end portions where the main cutting edge is located, is kept as small as possible.

On the other hand, this also limits the options to mount and fix the cutting insert within a corresponding recess of the blade. Typically, a corresponding cutting insert holder for parting and/or grooving comprises a blade of a substantially rectangular basic shape in a side view having two parallel side faces and peripheral edge faces connecting the side faces and having at least one slot extending from a corner portion of the basic rectangular shape and towards the center thereof, thereby defining a recess for receiving a cutting insert which recess is delimited by a bottom wall and a rear wall supporting the cutting insert, and a clamping finger arranged opposite of the bottom wall and defining a top wall of the recess. The edge surfaces are rather narrow corresponding to the narrow blade shape with two parallel side surfaces at a distance smaller than the length of a main cutting edge of the insert to be clamped when measured along the same direction.

In general, the recess formed between the clamping finger and the bottom of the recess is slightly narrower than the height of the cutting insert between the top side and the bottom side. The clamping finger, which is one piece with the remainder of the blade comprises a relatively weak connecting portion to the remainder of the blade such that the finger is resiliently movable to a certain extent. This allows to exert a clamping force on the cutting insert between the clamping finger and the bottom face of the recess when receiving the cutting insert. Upon inserting the cutting insert, the rear end face thereof abuts a corresponding stop portion at the inner or rear end of the recess, thereby defining the final position of the cutting insert within the recess.

In order to avoid any lateral movement or shift of the cutting insert in a direction perpendicular to the side faces of the blade, the top and bottom sides of the cutting inserts and also the corresponding faces of the clamping finger and of the bottom of the recess of the blade are typically provided with inter engaging projections and/or recesses in order to fix the position of the cutting insert.

Therefore, prior art cutting inserts are already provided with grooves or projections on the top or bottom sides thereof, while the clamping fingers and the bottom of the recess of the blade are comprising corresponding ridges or grooves, respectively in order to engage with the grooves and/or ridges of the cutting insert.

Regarding the double ended cutting insert according to the present invention, there may be noted that the term "double ended" refers to the fact that the corresponding elongated cuboid body is provided with a main cutting edge on both of its ends, namely at the transition from each of the end faces to the top and/or bottom sides.

The end faces of the elongated cuboid body generally serve as relief surfaces and therefore include an angle slightly smaller than 90° with the top side adjacent the end face, which top side serves as a rake surface in this area near the end face. There may also be provided minor cutting edges at the transition from such rake face towards the side faces of the cutting inserts wherein again the relief surfaces include an angle slightly smaller than 90° with the rake face formed by the top face near the end portions of the cutting inserts. In general, the terms "top side", "bottom side", "side faces" and "end faces" refers to the elongated, basically cuboid structure of the cutting insert disregarding further structural and functional elements such as the grooves, recessed portions or slightly angled edge portions or faces deviating from the basically cuboid structure. In that sense, the top side and bottom side extend parallel to each other and also the side faces are generally extending parallel to each other and deviations therefrom mainly occur near the end portions where cutting edges and rake faces are provided. The end faces are slightly angled such as to include an angle larger than 90° with the bottom side and smaller than 90° with the top side, and in particular with the rake face. The rake face may be provided with additional depressions, recesses and/or projections provided for chip forming.

In heavy load operations, in particular with large feed and/or tough and hard work pieces, wherein vibrations may occur, it turned out that the cutting inserts tend to move out of the recess in spite of the ridge and groove engagement on the top and bottom sides, respectively.

The present invention aims to reduce the risk of such cutting inserts to be laterally moved out of a corresponding recess in the blade of a tool holder.

This object is achieved by a cutting insert according to claim 1 and by a cutting insert holder according to claim 12.

The cutting insert according to the present invention is characterized in that each end face is provided with a groove extending from the relief surface near the cutting edge towards the bottom side and adapted to receive a correspondingly shaped projection of an insert holder. The corresponding insert holder comprises - at the rear stop face of the recess, a corresponding ridge engaging the groove at the inactive end face of the cutting insert. The term "inactive" refers to the fact that with such double ended cutting insert only the end projecting from the blade and out of the recess is active in a cutting operation while the other end of the cutting insert providing a further cutting edge is received within the recess and is thus not available for any cutting operation in this position. Accordingly, the cutting insert is supported against any lateral movement not only by the engagement of the ridges and grooves on the top and bottom sides, but also by corresponding projections and recesses, i. e. groove and ridge at the rear end face and the rear stop face of the recess. It may be noted that the end face generally still also serves as a relief surface, wherein, however it is sufficient that at least a small, narrow portion adjacent the cutting edge is left as a substantially planar relief surface, while the portion of the end face provided at some distance from the main cutting edge may comprise the additional groove according to the present invention.

According to the present invention, the groove in the end face is defined by two planar flank surfaces including an angle between 30° and 160°, preferably between 100° and 140°, wherein an imaginary intersection line of the planes defined by the flank surfaces extend within a mid-plane of the body which in turn is arranged between a parallel and equal distances to the side faces. In other words, the center of the grooves has the same distance to both side faces. This arrangement of the center of the groove along the mid plane may also be provided for the grooves on the top side and the bottom side, respectively.

According to the present invention, the intersection line of the flanks of the groove and thus the bottom of the groove at the end face extends under an angle with regard to the bottom side which is slightly larger than the angle included between the relief surface adjacent the cutting edge and the bottom side. The cutting insert holder and more precisely the blade thereof having the recess for receiving the cutting insert, has corresponding ridges defined by two flank surfaces including an angle which might be the same or slightly larger than the angle between the flanks of the grooves in order to provide - irrespective of any production tolerances - a solid engagement near the lateral outer ends of the ridges and grooves rather than just at the center thereof. In general, the grooves may have a trapezoidal or triangular cross section, wherein in the latter case the tip of the triangular cross section may be rounded.

Corresponding to the slight deviation from a perpendicular extension to the bottom side, also the imaginary intersection line and thus the bottom of the grooves extends at an angle larger than 90° to the plane defined by the bottom side.

The term "bottom side" generally refers to the side which does not form a cutting edge at the transition to an end face. It may be noted, however, that embodiments may be envisaged in which the roles of top and bottom sides are reversed at the two end portions of the cutting insert, which means that on one end of the cutting insert the cutting edge may be formed with the top side, while on the opposite end, the cutting edge may be formed at the transition from the end face to the side which would be the bottom side for the first mentioned end but is the top side for the other end, for which in turn the top side of the first end serves as the bottom side when seen from the second end.

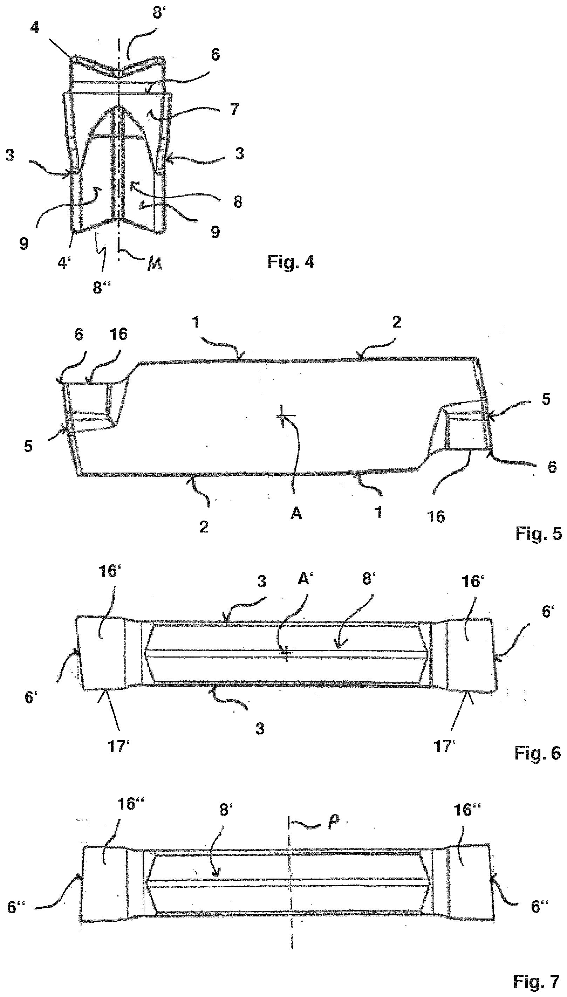

A corresponding embodiment visualizing this aspect is shown in figure 5. As already mentioned, also the top and bottom sides may be provided with a groove extending with the groove bottom longitudinally along the mid plane. In general, a number of embodiments may be defined by the symmetry thereof, wherein the cutting insert may be mirror symmetric with respect to at least one of
- the mid plane,
- a plane perpendicular to the side surfaces and to the top and bottom sides,
- a center point.

Other embodiments may be symmetric with regard to a 180° rotation about at least one of
- an axis extending perpendicular to the mid plane,
- a central axis extending within the mid plane from the top side to the bottom side.

Further, the extension of the cutting edge measured perpendicular to the mid plane may be larger than the width between the side faces measured at any other position. In other words, the portion comprising the cutting edge defines the widest portion of the cutting insert, which guarantees that any groove which is generated in a parting or grooving operation is wider than any part of the cutting insert following the cutting edge into the groove. If the blade has the same or even a smaller width than the cutting insert in the center portion thereof, also a part of the tool holder blade may enter the groove generated by the cutting edge.

The engagement between the groove provided at an end face and the ridge like projection at the rear stop face of the recess of the tool blade gives the cutting insert additional stability against lateral movements relative to the tool blade.

In a plan view on the top side, the end portions of the basically cuboid body are slightly wider than the center portion and the ends are expanding towards the cutting edge such that the latter defines the widest portion of the cutting insert when seen in a top view. The side faces adjacent minor cutting edges, which are thus formed on the end portions at the transition of the side faces to the rake face on the top side also include an angle larger than 90° with the bottom side in order to provide an appropriate relief angle for the minor cutting edges. Regarding the cutting insert holder and in particular, the blade thereof, one embodiment provides a clearance adjacent the ends of the rear stop face. Such clearance serves to receive the active cutting edge inserted into the recess of the tool blade. In correspondence to the position of the grooves on the end faces, the crest of a corresponding ridge at the rear stop face of the tool blade recess also extends along a mid-plane defined between the parallel side surfaces of the tool blade. The tool blade may have the same width, measured between the side faces thereof as the cutting insert measured between the side faces in the center portion of the cutting insert.

Further advantages and features of the present invention may be gathered from the following description of preferred embodiments and by reference to the corresponding drawings in which:
Figure 1 is a side view visualizing also the grooves provided at the end faces and the top and bottom sides of a cutting insert.
Figure 2 is a plan side view.
Figure 3 is a top view on a cutting insert.
Figure 4 is an end view of a cutting insert.
Figure 5 is the side view of another embodiment having its cutting edges arranged on opposite sides.
Figures 6 and 7 are top views of further embodiments with cutting edges including different angles with the opposite side faces and/or with the minor cutting edges.
Figure 8 a) - d) show a cutting insert holder 20 together with a cutting insert 10 in various relative positions.

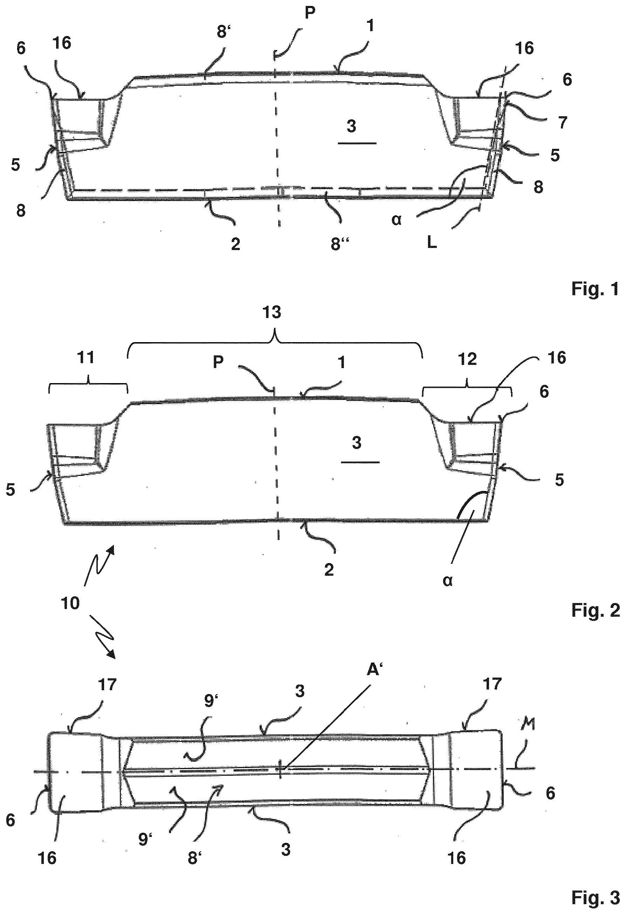

Figure 1 shows a side view of a first embodiment of the present invention, in which the side faces 3 extend parallel to the plane of the paper while the top side 1 and bottom side 2 extend perpendicular to the plane of the paper as well as the end faces 5. A dashed line parallel to the bottom face indicates the bottom of a groove 8" longitudinally extending along the bottom side 2 which groove is better visible in cross section in the front view according to figure 4.

A corresponding groove 8' is provided on the top side 1. The top side has recessed end portions so that the height from the bottom side 2 to the top side 1 is somewhat reduced near the end faces. The recessed parts of the topside provide rake faces 16 adjacent cutting edges 6 which are the main cutting edges in a parting or grooving operation.

According to the invention, also the end faces 5 are each provided with a corresponding groove 8. All grooves have a general trapezoidal or triangular cross section, wherein the bottom of the groove is either flat or slightly rounded while in the remainder the groove is defined by two flank surfaces 9 as shown for the grooves 8 at the end faces 5 in figure 4. The flattened or rounded bottom of the grooves means that the intersection line L between the two flank surfaces 9 would be located below the bottom of each groove and parallel thereto as shown in figure 1.

In a corresponding manner, also the upper groove 8' is defined by two flank surfaces 9' and the lower groove 8" is defined by two angled flank surfaces similar to the top side flank surfaces 9'. The angle between the flanks 9, and 9' are the same in this embodiment and amount about 130°.

As can be seen in the lateral view according to figure 2, the end faces are not exactly planar wherein the lower portion of the end faces 5 includes a slightly larger angle α (also shown in figure 1) with the bottom side 2 than the upper portion thereof, wherein the upper portion of the end face 5 forms a relief surface 7 adjacent the cutting edge 6. The straight flank surfaces 9 intersect with the relief surface 7 at some distance from the cutting edge 6 so that the strength and stability of the cutting edge is not affected by the groove 8.

The rake surface 16 is slightly offset from the center plane defined by the top side 1 but substantially parallel thereto, wherein any further details of the rake surface are not shown in the figures. The cutting edges 6 are formed by the transition from the rake surface 16 to the relief surface 7. From the top view according to figure 3, there may be recognized that the end portions 11, 12 of the cutting insert 10 are slightly wider and expanding from the center portion 13 towards the cutting edges 6. Minor cutting edges 17 are formed at the transition from the rake surface 16 to the side faces 3. At the slightly wider end portions 11, 12, the side faces 3 are again slightly angled such as to include an angle of more than 90° with the plane of the bottom side 2, thereby providing a corresponding relief angle for the minor cutting edges 17 as can be derived from the top view of figure 3 and the front view of figure 4, the cutting insert 10 is mirror symmetric with respect to the mid plane M and is in addition symmetric with regard to a 180° rotation about an axis A' extending within the mid plane and perpendicular to the bottom side 2 (marked with a cross in figure 3).

As shown with the embodiment of figure 5, the cutting edges 6, which are provided on opposite ends of the cutting insert, may also be provided on opposite sides, i.e. on the top side at one end and the bottom side at the other end, wherein the role of top and bottom sides is reversed simply by rotation about an axis A extending perpendicular to the plane of the paper at the position of the cross mark at the center of the cutting insert. In the remainder, the previous description of details fits separately for each of the halves of the cutting insert on either side of the cross, except for the rotational symmetry about the axis shown in figure 3. Instead, there is again mirror symmetry with regard to the mid plane, point symmetry with regard to a point located on the axis A marked by a cross and rotational symmetry with regard to a rotation by 180° about the axis A extending perpendicular to the plane of the paper and through the cross marked in figure 5.

Further alternative embodiments are shown in figures 6 and 7 in which the main cutting edges 6' and 6" are slightly tilted with respect to the cutting edges of the embodiment shown in figure 4. In the embodiment of figure 6, the cutting edge includes a smaller angle with the minor cutting edge 17' on the right side than on the left side on both ends, such that again the cutting insert is symmetric with regard to rotation about an axis A' marked by the cross and extending perpendicular to the plane of the paper. Such rotation corresponds to the exchange of active and inactive cutting edges so that in both cases, the same corner at the transition from the main cutting edge 6' to the minor cutting edge 17' would be projecting when compared to the other corner. In figure 7 embodiment, the main cutting edges 6" are angled at different directions, such that upon turning the insert for exchanging active and inactive cutting edges, the more projecting cutting corner would occur on different sides for the two cutting edges. Still, this cutting edges is mirror symmetric with regard to a plane P indicated by the dashed line and extending perpendicular to the plane of the paper. Still, all these embodiments would be provided with the same type of grooves as described and also at the end faces of the embodiments of figures 6 and 7, the bottom of the groove would be centered with regard to the mid plane M in order to be used with the same cutting insert holder.

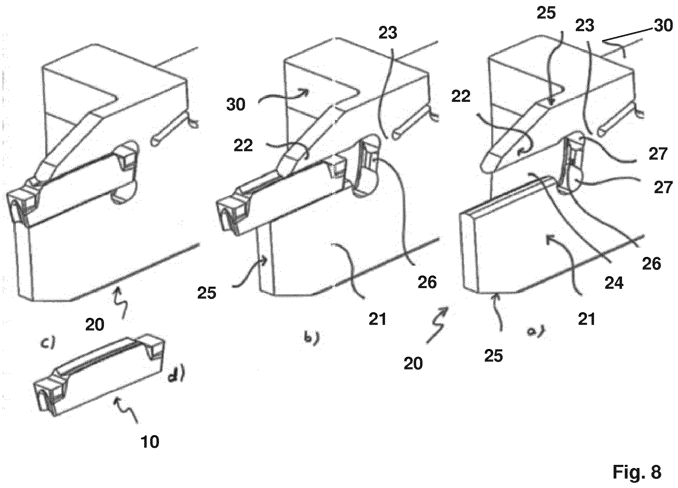

The cutting insert holder is shown together with a cutting insert according to any of figures a) to d) in figure 8. As can be seen, the cutting insert holder 20 comprises a wider mounting portion having the shape of a block 30, and a narrow blade 25 which blade has, in a planar side view, a basically rectangular shape, wherein the upper left portion in figure 8a is removed and a recess 24 is formed in the upper portion of the blade from the front end to a rear end adjacent the mounting block 30. The lower part of the blade forms a rigid portion 21, while the narrower upper portion of the blade forms a clamping finger 22, wherein the connecting part of the clamping finger 22 to the remainder of the blade 25 and/or the mounting block is formed by a narrow transition 23 such that the clamping finger 22 is resiliently movable away from the lower portion 21 of the blade 25 in order to provide an appropriate clamping force on a cutting insert, which is shown during mounting and in the finally mounted position in figures 8b and 8c, respectively. As can be seen, the rear stop face of the recess 24 is formed with a ridge like projection 26 having a cross sectional shape such as to fit within the groove 8 of the end faces 5 of a corresponding cutting insert.

For mounting the cutting insert 10 within the recess 24, a corresponding tool may be provided which slightly bends the front part of the mounting block 30 (cf. figure 8b) about an axis defined by the weak transition portion 23 and thereby lifts the clamping finger 22 in order to allow the cutting insert 10 (shown in figure 8d) to be fitted into the recess 24 according to the succession of steps shown in figures 8a through 8c until the cutting insert 10 abuts at the rear end face of the recess 24 at which the groove 8 accommodates the ridge like projection 26. It may be noted that a clearance 27 is provided above and below the ridge like projection 26 in order to provide a space for receiving an inactive cutting edge or the lower edge at the inactive inserted end of the cutting insert 10.

### Reference numerals

- 1: top side
- 2: bottom side
- 3: side face
- 5: end face
- 6: main cutting edge
- 7: relief surface
- 8: groove
- 8': upper groove
- 8": lower groove
- 9: flank surface
- 9': flank surface
- 10: cutting insert
- 11: end portion
- 12: end portion
- 13: center portion
- 16: rake surface
- 17: minor cutting edge
- 17': minor cutting edge
- 20: cutting insert holder
- 21: rigid portion/lower portion
- 22: clamping finger
- 23: transition
- 24: recess
- 25: blade
- 26: ridge like projection
- 27: clearance
- 30: mounting portion/block

## Claims

1. Double ended cutting insert (10) designed for parting and grooving, having the basic shape of an elongated cuboid body comprising a top side (1), a bottom side (2), two oppositely arranged side faces (3) connecting the left and right edges, respectively, of the top and bottom sides, and two oppositely arranged end faces (5) connecting the top (1) and bottom sides (2) as well as the side faces (3), wherein main cutting edges (6) are formed at the transition from each of the end faces(5) to the top side (1) and/or the bottom side (2) wherein a relief surface (7) is formed on the end faces (5) adjacent each cutting edge (6), wherein each end face is provided with a groove (8) extending from the relief surface (7) towards the bottom side (2) and adapted to receive a correspondingly shaped projection of an insert holder (20), wherein the groove (8) is defined by two planar flank surfaces (9) including an angle between 30 and 160 °, preferably 100 - 140° wherein an imaginary intersection line (L) of the planes defined by the flank surfaces (9) extends within a mid-plane (M) of the body, which is arranged between and parallel and at equal distances to the side faces (3), **characterized in that** the imaginary intersection line includes an angle (alpha) larger than 90° with a plane defined by the bottom side opposite of the cutting edge.

2. Cutting insert according to claim 1, **characterized in that** each of the top and bottom sides (1, 2,) comprises a groove extending with the bottom thereof longitudinally along the mid-plane.

3. Cutting insert according to any of the preceding claims, **characterized in that** cutting edges are provided at the transition of both end faces to the top side.

4. Cutting insert according to any of the preceding claims, **characterized in that** a cutting edge is provided at the transition of end face to the top side and diagonally opposite of the transition to the bottom side.

5. Cutting insert according to any of the preceding claims, **characterized in that** cutting insert is mirror symmetric with respect to at least one of
- a mid-plane (M)
- a plane perpendicular to the side surfaces and the top and bottom sides
- a center point.

6. Cutting insert according to any of the preceding claims 1 to 6, **characterized in that** it is symmetric with regard to a 180° rotation about at least one of
- an axis extending perpendicular to a mid-plane (M)
- a central axis extending within the mid-plane from the top side to the bottom side.

7. Cutting insert according to any of the preceding claims, **characterized in that** the extension of the cutting edge measured perpendicular to a mid-plane (M) is larger than the width between the side faces measured at any other position between the side faces.

8. Cutting insert according to any of the preceding claims, **characterized in that** in a plan view on the top side, the end portions of the basically cuboid body are wider than the center portion center and expanding towards the cutting edge.

9. Cutting insert according to any of the preceding claims, **characterized in that** the side faces adjacent the minor cutting edges which are formed on the end portions at the transition of the side faces to the rake face on the tope include an angle larger than 90° with the bottom side.

## Patentansprüche

1. Doppelseitiger Schneideinsatz (10) zum Trennen und Nuten, der die Grundform eines länglichen quaderförmigen Körpers aufweist mit einer Oberseite (1), einer Unterseite (2), zwei gegenüberliegend angeordneten Seitenflächen (3), die jeweils die linke und rechte Kante der Ober- und Unterseite verbinden, und zwei gegenüberliegend angeordneten Stirnflächen (5), die die Ober- (1) und Unterseite (2) sowie die Seitenflächen (3) verbinden, wobei Hauptschneidkanten (6) am Übergang von jeder der Stirnflächen (5) zur Oberseite (1) und/oder zur Unterseite (2) ausgebildet sind, wobei an den Stirnflächen (5) neben jeder Schneidkante (6) eine Freifläche (7) ausgebildet ist, wobei jede Stirnfläche mit einer Nut (8) versehen ist, die sich von der Freifläche (7) zur Unterseite (2) erstreckt und zur Aufnahme eines entsprechend geformten Vorsprungs eines Einsatzhalters (20) ausgelegt ist, wobei die Nut (8) durch zwei ebene Flankenflächen (9) definiert ist, die einen Winkel zwischen 30 und 160 ° einschließen, vorzugsweise 100 - 140°, wobei sich eine imaginäre Schnittlinie (L) der durch die Flankenflächen (9) definierten Ebenen in einer Mittelebene (M) des Körpers erstreckt, die zwischen den Seitenflächen (3) angeordnet ist und parallel zu diesen und in gleichem Abstand zu ihnen verläuft, **dadurch gekennzeichnet, dass** die imaginäre Schnittlinie einen Winkel (alpha) von mehr als 90° mit einer Ebene bildet, die durch die der Schneidkante gegenüberliegende Unterseite definiert ist.

2. Schneideinsatz nach Anspruch 1, **dadurch gekennzeichnet, dass** jede der Ober- und Unterseiten (1, 2) eine Nut aufweist, deren Boden sich in Längsrichtung entlang der Mittelebene erstreckt.

3. Schneideinsatz nach einem der vorstehenden Ansprüche, **dadurch gekennzeichnet, dass** am Übergang beider Stirnflächen zur Oberseite Schneidkanten vorgesehen sind.

4. Schneideinsatz nach einem der vorstehenden Ansprüche, **dadurch gekennzeichnet, dass** am Übergang der Stirnfläche zur Oberseite und diagonal gegenüber dem Übergang zur Unterseite eine Schneidkante vorgesehen ist.

5. Schneideinsatz gemäß einem der vorstehenden Ansprüche, **dadurch gekennzeichnet, dass** der Schneideinsatz zu mindestens einer der folgenden Ebenen spiegelsymmetrisch ist
- einer Mittelebene (M)
- einer Ebene senkrecht zu den Seitenflächen und der Ober- und Unterseite
- einem Mittelpunkt.

6. Schneideinsatz gemäß einem der vorstehenden Ansprüche 1 bis 6, **dadurch gekennzeichnet, dass** er symmetrisch zu einer 180°-Drehung um mindestens eines der folgenden Elemente ist
- einer Achse, die senkrecht zu einer Mittelebene (M) verläuft
- einer Mittelachse, die sich innerhalb der Mittelebene von der Oberseite zur Unterseite erstreckt.

7. Schneideinsatz gemäß einem der vorstehenden Ansprüche, **dadurch gekennzeichnet, dass** die senkrecht zu einer Mittelebene (M) gemessene Ausdehnung der Schneidkante größer ist als die an einer beliebigen anderen Position zwischen den Seitenflächen gemessene Breite zwischen den Seitenflächen.

8. Schneideinsatz gemäß einem der vorstehenden Ansprüche, **dadurch gekennzeichnet, dass** in einer Draufsicht auf die Oberseite die Endabschnitte des im Wesentlichen quaderförmigen Körpers breiter sind als der Mittelabschnitt und sich zur Schneidkante hin erweitern.

9. Schneideinsatz nach einem der vorstehenden Ansprüche, **dadurch gekennzeichnet, dass** die Seitenflächen, die an die kleinen Schneidkanten angrenzen, die an den Endabschnitten am Übergang der Seitenflächen zur Spanfläche an der Oberseite ausgebildet sind, einen Winkel von mehr als 90° zur Unterseite einschließen.

## Revendications

1. Insert de coupe à double extrémité (10) conçu pour la séparation et le rainurage, présentant la forme de base d'un corps cuboïde allongé qui comprend un côté de sommet (1), un côté de fond (2), deux faces latérales agencées de manière opposée (3) qui relient respectivement les bords gauche et droit des côtés de sommet et de fond et deux faces d'extrémité agencées de manière opposée (5) qui relient le côté de sommet (1) et le côté de fond (2) de même que les faces latérales (3), dans lequel des bords de coupe principale (6) sont formés au niveau de la transition depuis chacune des faces d'extrémité (5) en direction du côté de sommet (1) et/ou en direction du côté de fond (2), dans lequel une surface de dépouille (7) est formée sur les faces d'extrémité (5) de façon adjacente à chaque bord de coupe (6), dans lequel chaque face d'extrémité est munie d'une rainure (8) qui est étendue depuis la surface de dépouille (7) en direction du côté de fond (2) et qui est adaptée pour recevoir une projection présentant une forme en correspondance d'un porte-insert (20), dans lequel la rainure (8) est définie par deux surfaces de flanc à fonction de dépouille planes (9) qui incluent un angle entre 30° et 160°, de préférence entre 100° et 140° et dans lequel une ligne d'intersection imaginaire (L) des plans qui sont définis par les surfaces de flanc à fonction de dépouille planes (9) est étendue à l'intérieur d'un plan médian (M) du corps, lequel est agencé entre les faces latérales (3), est parallèle à celles-ci et est à des distances égales de celles-ci, **caractérisé en ce que** :
la ligne d'intersection imaginaire inclut un angle (alpha) supérieur à 90° par rapport à un plan qui est défini par le côté de fond qui est opposé au bord de coupe.

2. Insert de coupe selon la revendication 1, **caractérisé en ce que** chaque côté parmi les côtés de sommet et de fond (1, 2) comprend une rainure qui est étendue de telle sorte que son fond soit situé longitudinalement le long du plan médian.

3. Insert de coupe selon l'une quelconque des revendications précédentes, **caractérisé en ce que** des bords de coupe sont prévus au niveau de la transition des deux faces d'extrémité en direction du côté de sommet.

4. Insert de coupe selon l'une quelconque des revendications précédentes, **caractérisé en ce qu'**un bord de coupe est prévu au niveau de la transition de face d'extrémité en direction du côté de sommet et en diagonale à l'opposé de la transition en direction du côté de fond.

5. Insert de coupe selon l'une quelconque des revendications précédentes, **caractérisé en ce que** l'insert de coupe est selon une symétrie miroir par rapport à au moins un élément à fonction de symétrie parmi :
- un plan médian (M) ;
- un plan perpendiculaire aux surfaces latérales et aux côtés de sommet et de fond ; et
- un point central.

6. Insert de coupe selon l'une quelconque des revendications précédentes 1 à 6, **caractérisé en ce qu'**il est symétrique en ce qui concerne une rotation de 180° autour d'au moins un axe parmi :
- un axe qui est étendu perpendiculairement à un plan médian (M) ; et
- un axe central qui est étendu à l'intérieur du plan médian depuis le côté de sommet jusqu'au côté de fond.

7. Insert de coupe selon l'une quelconque des revendications précédentes, **caractérisé en ce que** l'extension du bord de coupe telle que mesurée perpendiculairement à un plan médian (M) est plus grande que la largeur entre les faces latérales telle que mesurée au niveau d'une quelconque autre position entre les faces latérales.

8. Insert de coupe selon l'une quelconque des revendications précédentes, **caractérisé en ce que**, selon une vue en plan sur le côté de sommet, les parties d'extrémité du corps cuboïde de base sont plus larges que la partie centrale et sont étendues en direction du bord de coupe.

9. Insert de coupe selon l'une quelconque des revendications précédentes, **caractérisé en ce que** les faces latérales qui sont adjacentes aux bords de coupe secondaire qui sont formés sur les parties d'extrémité au niveau de la transition des faces latérales en direction de la face d'attaque sur le côté de sommet incluent un angle supérieur à 90° par rapport au côté de fond.
